# EUROPÄISCHE PATENTSCHRIFT

(11) **EP 2 220 746 B1**
(45) Veröffentlichungstag und Bekanntmachung des Hinweises auf die Patenterteilung: **04.05.2011**
(21) Anmeldenummer: 09753550.4
(22) Anmeldetag: 02.06.2009
(51) Int. Cl.: H02J 9/08

(54) **SYSTEM ZUR NOTSTROMVERSORGUNG BEI AUSFALL EINES STROMNETZES**
SYSTEM FOR EMERGENCY POWER SUPPLY IN CASE OF POWER GRID FAILURE
SYSTÈME POUR L'ALIMENTATION DE SECOURS EN CAS DE PANNE DE SECTEUR

(30) Priorität: 30.05.2008 DE 102008026575; 07.01.2009 DE 102009004273
(43) Veröffentlichungstag der Anmeldung: 25.08.2010
(73) Patentinhaber: Timekontor AG, 10119 Berlin (DE)
(72) Erfinder: LEITERT, Thomas, 13156 Berlin (DE); SCHWENZIEN, Ingo, 12161 Berlin (DE)
(74) Vertreter: Jungblut & Seuss
(86) Internationale Anmeldenummer: PCT/DE2009/000760
(87) Internationale Veröffentlichungsnummer: WO 2009/143834

(56) Entgegenhaltungen:
- EP-A- 1 819 033
- US-A1- 2005 278 075
- US-A1- 2008 058 997

## Beschreibung

Die Erfindung betrifft ein System zur Notstromversorgung bei Ausfall eines Stromnetzes, insbesondere bei längerfristigen Stromausfällen. Das System basiert dabei auf Notstromaggregaten, die automatisch ein autarkes Telekommunikationsnetz aufbauen und über dieses Netz Daten zum Betriebszustand des Notstromversorgungssystems sowie ggf. weitere Daten übermitteln.

### Hintergrund und Stand der Technik

Fast alle kritischen Infrastrukturen hängen heute von einer zuverlässigen Energieinsbesondere Stromversorgung ab. Im Fall von Stromausfällen sind diese Infrastrukturen und Einrichtungen wie Wasser- und Gasversorgung, Leitstellen, Krankenhäuser, Telekommunikationseinrichtungen oder Rechenzentren nur durch Notstromversorgung weiter einsatzfähig. Bei länger andauernden Stromausfällen hängt die Funktionsfähigkeit der Notstromversorgung von der Batteriekapazität, dem Funktionieren der Kraftstoffversorgung oder dem jeweiligen Kraftstoffvorrat ab. In der Regel reichen die Kapazitäten bzw. Tankreserven für einen Betrieb zwischen drei Stunden (beispielsweise Basisstationen von Mobilnetzen) bis maximal 24 Stunden in Krankenhäusern. Nur wenige Rechenzentren verfügen über Reserven für 72 Stunden Betrieb. Zur Aufrechterhaltung der Notstromversorgung ist daher bei länger andauerndem Stromausfall der Nachschub von Kraftstoff essenziell. Auch mobile Notstromaggregate, die beispielsweise das Technische Hilfswerk (THW) in großer Zahl zur Verfügung stellen kann, sind von einer funktionierenden Kraftstoffversorgung abhängig. Hinzu kommt, dass heutzutage die wenigsten Organisationen über eine eigene sichere Kraftstoffversorgung verfügen. Selbst die Polizei, die Feuerwehr und das THW sind auf die Kraftstoffversorgung durch öffentliche Tankstellen angewiesen. Im Fall eines flächendeckenden Stromausfalls stehen auch Tankstellen für die Versorgung mit Kraftstoffen nicht mehr zur Verfügung, da sie üblicherweise keinerlei Notstromversorgung haben. Der Kraftstoff kann somit nicht aus den Tanks in Fahrzeuge oder Notstromaggregate gepumpt werden. Auch besteht gegenwärtig nicht die Möglichkeit, einfach Notstromaggregate an die Tankstellen anzuschließen und sie damit zu betreiben, da Tankstellen dafür nicht vorbereitet sind.

Für die Belieferung von Notstromaggregaten und Tankstellen mit Kraftstoff muss dieser in Tanklagern vorhanden sein und er muss ausgeliefert werden können. Dazu müssen die Speditionen über den Bedarf informiert und der Einsatz ihrer Tankfahrzeuge koordiniert werden können. Für die Befüllung der Tankwagen sind funktionierende Tanklager nötig. Die Situation wird dadurch verschärft, dass im Fall eines großflächigen Stromausfalls alle Notstromaggregate zur selben Zeit anspringen und dann auch zu ungefähr derselben Zeit wieder betankt werden müssen. Dies führt zu einer Zuspitzung der Situation und stellt enorme Anforderungen an das Logistikkonzept. Entsprechende Notwendigkeiten ergeben sich in analoger Weise auch bei anderen Energieformen, wie beispielsweise Druckgasen (Propan, Butan, Wasserstoff), flüssigem Wasserstoff, elektrischen Energiespeichern (Akkus), aber auch Kühlenergiespeichern (beispielsweise Stickstoff, Helium, Wasserstoff in flüssiger Form).

### Aufgabe der Erfindung.

Die Aufgabe der Erfindung ist es daher, ein System zur Notstromversorgung bei Ausfall des Stromnetzes zur Verfügung zu stellen, welches in der Lage ist, die Kraftstoffversorgung sowohl für die Notstromaggregate, als auch für die Fahrzeuge der Einsatz- und Rettungskräfte so lange wie möglich sicherzustellen, um den Totalausfall dieser Systeme zu verhindern.

### Lösung der Aufgabe

Die Lösung der Aufgabe besteht in dem erfindungsgemäßen System zur Notstromversorgung, enthaltend mindestens zwei Notstromaggregate mit jeweils mindestens einem Kraftstoff- oder Energievorrat und mindestens eine Telekommunikationszentrale, dadurch gekennzeichnet, dass die Notstromaggregate folgende Merkmale aufweisen
a) mindestens ein Sensor, der die Menge des Kraftstoff- oder Energievorrats ermittelt,
b) optional eine Recheneinheit, die aus der Veränderung des Kraftstoff- oder Energievorrats den Kraftstoff oder Energieverbrauch pro Zeiteinheit und/oder die Restlaufzeit des Notstromaggregats ermittelt,
c) mindestens eine Telekommunikationseinheit, die sich nach dem Start des Notstromaggregats automatisch mit anderen Notstromaggregaten verbindet und mindestens die Menge der Kraftstoff- oder Energievorräte des Notstromaggregats und/oder den Kraftstoff- oder Energieverbrauch pro Zeiteinheit und/oder die Restlaufzeit des Notstromaggregats übermittelt,
weiterhin dadurch gekennzeichnet, dass die Telekommunikationszentrale, mindestens die gesendeten Daten über die Kraftstoff- oder Energievorräte der Notstromaggregate empfängt und auswertet.

Das erfindungsgemäße System zur Notstromversorgung enthält bevorzugt mindestens 5 erfindungsgemäße Notstromaggregate, besonders bevorzugt mindestens 10 erfindungsgemäße Notstromaggregate.

### Beschreibung der Erfindung und bevorzugte Ausführungsformen

Das erfindungsgemäße System basiert daher auf einem kraftstoff- (z.B. diesel-) betriebenen Notstromaggregat. Dieses Notstromaggregat ist in der Lage, die Stromversorgung einer zu versorgenden Einheit (beispielsweise eines Krankenhauses oder einer Tankstelle) sicherzustellen. Der hierfür erzeugte Strom kann beispielsweise Niederspannungen von 110, 220, 250 oder 380 V oder auch Mittelspannungen von 3kV bis 30kV aufweisen. Die Leistung des Notstromaggregats kann bei kleineren Einheiten im Bereich weniger kVA (Kilo-Voltampere (frühere Bezeichnung: Kilowatt)) liegen, für größere zu versorgende Einheiten wird sie bevorzugt im Bereich mehrere hundert kVA liegen. Derartige Systeme sind bekannt und kommerziell erhältlich. Das erfindungsgemäße Notstromaggregat weist mindestens einen Sensor auf, der die Menge des Kraftstoffvorrates und/oder den Kraftstoffverbrauch pro Zeiteinheit ermittelt, sowie weiterhin mindestens einer Recheneinheit, die aus der Veränderung des Kraftstoffvorrates oder aus dem Kraftstoffverbrauch pro Zeiteinheit die Restlaufzeit ermittelt. Derartige Systeme sind beispielsweise aus dem Kfz-Bereich bekannt und bedürfen daher keiner weiteren Erläuterung. In einer alternativen Ausführungsform ist die Recheneinheit in die Telekommunikationszentrale integriert und ermittelt dort aus den übermittelten Daten zur Menge des Kraftstoffvorrates und/oder zum Kraftstoffverbrauch pro Zeiteinheit die Restlaufzeit des Notstromaggregates. Der Begriff "Kraftstoff" umfasst dabei auch die eingangs geschilderten anderen Energieformen, wie beispielsweise Druckgase, Flüssigwasserstoff, gespeicherte elektrische Energie, Kühlenergie.

Ferner weist das Notstromaggregat eine Telekommunikationseinheit auf. Die Telekommunikationseinheit startet nach dem Start des Notstromaggregats selbständig und kann zumindest die Sensordaten zur Kraftstoff- oder Energiemenge und/oder die Restlaufzeit des Notstromaggregats übermitteln.
Zu diesem Zweck kann die Telekommunikationseinheit sich bestehender Telekommunikationsnetze (wie z.B. ISDN, W-LAN, GSM, Mobilfunk, POTS, Tetra, Satellitenfunk) bedienen.
In einer bevorzugten Ausführungsform der Erfindung bauen zwei oder mehr der erfindungsgemäßen Notstromaggregate ein autarkes Telekommunikationsnetz auf, welches unabhängig von bestehender Telekommunikations-Infrastruktur und/oder bereits bestehenden Netzen operiert. Diese Betriebsart ermöglicht insbesondere die autarke Telekommunikation im Fall eines langanhaltenden großflächigen Stromausfalls, da in einer solchen Situation die Operationsfähigkeit bestehender Telekommunikationsnetze nicht sichergestellt ist.
Derartige Systeme zum Aufbau autarker Telekommunikationsnetze sind aus verschiedenen Bereichen bekannt und bedürfen daher keiner weiteren Erläuterung.

In einer weiteren bevorzugten Ausführungsform der Erfindung enthält die Telekommunikationseinheit eine weitere Stromversorgung (z.B. Batterie, Akku, Solarpanel, Brennstoffzelle), so dass bei Ausfall des Notstromaggregats (beispielsweise mangels Kraftstoffnachschub oder wegen eines Fehlers) die Übertragung der entsprechenden Daten (beispielsweise Standort und Betriebszustand/Fehlermeldung) weiter gewährleistet ist. Derartige Systeme zur Gewährleistung einer unterbrechungsfreien Stromversorgung sind prinzipiell bekannt und bedürfen an dieser Stelle keiner weiteren Erläuterung.

In einer Ausführungsform der Erfindung ist das erfindungsgemäße Notstromaggregat an ein Stromnetz angeschlossen. Dieser Anschluss gewährleistet, dass die zum Start der Notstromversorgung notwendige elektrische Energie, beispielsweise durch einen ständig geladenen Akku, vorhanden ist. Alternativ kann das Notstromaggregat auch durch Druckluft gestartet werden. Bei Ausfall des Stromnetzes wird der Notstromgenerator gestartet. Dieser gewährleistet dann den weiteren Betrieb der Telekommunikationseinheit. Die Telekommunikationseinheit kann nach dem Start des Generators gestartet werden. Alternativ ist es auch möglich, dass zunächst die Telekommunikationseinheit startet, wobei sie einen Akku nutzt und anschließend der Generator gestartet wird. Die im vorherigen Absatz geschilderte weitere Stromversorgung (zum Beispiel Batterie, Akku, Solarpanel, Brennstoffzelle) bewirkt, dass bei Versagen des Stromgenerators die Telekommunikationseinheit zumindest eine Zeit lang weiter betrieben werden kann. Je nach Stromverbrauch kann die Telekommunikationseinheit zumindest noch einige Stunden, bevorzugt noch einige Tage, weiter betrieben werden, so dass zumindest das Versagen des Notstromaggregats übermittelt werden kann. In einer weiteren Ausführungsform der Erfindung können auch weitere Daten übertragen werden, auch wenn der Generator selbst versagen sollte. Bevorzugt werden hierbei zumindest die Standortdaten (z.B. GPS) und die Art des Versagens übertragen.

Das erfindungsgemäße Notstromaggregat kann selbstverständlich auch so ausgestaltet sein, dass es alternativ entweder ein bestehendes Telekommunikationsnetz oder ein durch mehrere Notstromaggregate aufgebautes autarkes Telekommunikationsnetz nutzen kann.

Das erfindungsgemäße Notstromaggregat kann weiterhin auch so ausgestaltet sein, dass es kontinuierlich oder zu bestimmten Zeitpunkten Statusinformationen (z.B. Betriebszustand, Kraftstoffvorrat, Restlaufzeiten, Fehlermeldungen, Wartungsintervalle, Standort) über ein bestehendes Telekommunikationsnetz oder ein durch mehrere Notstromaggregate aufgebautes autarkes Telekommunikationsnetz meldet.

Die für die erfindungsgemäße Verwendung benötigten Telekommunikationseinrichtungen sind prinzipiell bekannt und in der Fachliteratur beschrieben. Ebenso bekannt sind die dazugehörigen Schnittstellen und Kommunikationsprotokolle, die eine reibungslose Datenkommunikation (auch bei Ausfall einer oder mehrerer Telekommunikationseinrichtungen) ermöglichen. Telekommunikationseinrichtungen, Schnittstellen und Datenprotokolle benötigen an dieser Stelle daher keine weiteren Erläuterungen.

In einer weiteren Ausführungsform der Erfindung enthält das Notstromaggregat oder die Telekommunikationszentrale zusätzlich eine Einheit zur Kontrolle der Wartungsintervalle. Bei Herannahen des Intervallendes wird automatisch eine Information an die Telekommunikationszentrale gesendet oder dort dargestellt, um die Wartung vorzunehmen.

In einer weiteren Ausführungsform der Erfindung enthält das Notstromaggregat zusätzlich eine Einheit zur Kontrolle des Betriebszustandes (z.B. An/Aus, Volllast, Teillast, Fehler) und übermittelt diese Daten mittels der Telekommunikationseinheit an die Telekommunikationszentrale.

In einer weiteren Ausführungsform der Erfindung enthält das Notstromaggregat zusätzlich eine Einheit zur Kontrolle des Zustands der Stromversorgung durch das öffentliche Netz (z.B. Spannung, Frequenz) und übermittelt diese Daten mittels der Telekommunikationseinheit an die Telekommunikationszentrale.

In einer weiteren Ausführungsform der Erfindung enthält das Notstromaggregat einen oder mehrere Fehlersensoren, die während des Betriebes Fehler des Aggregates detektieren und mittels der Telekommunikationseinheit an die Telekommunikationszentrale übermitteln. Mittels dieser Information ist es möglich, Reparaturen in Abhängigkeit von dem Fehler, der Position des Notstromaggregats und der Wichtigkeit der Notstromversorgung am jeweiligen Versorgungspunkt vorzunehmen.

Des Weiteren wird für das erfindungsgemäße System mindestens eine Telekommunikationszentrale benötigt, die die übermittelten Daten, insbesondere die Restlaufzeiten der Notstromaggregate, empfängt und auswertet. In der erfindungsgemäßen Telekommunikationszentrale werden die Daten der einzelnen Notstromaggregate empfangen und je nach Bedarf priorisiert. Aus der Zentrale kann beispielsweise die Logistik des Kraftstoffnachschubs organisiert werden. Hierzu können in einer ersten Ausführungsform die Restlaufzeiten und Positionen der Notstromaggregate ermittelt werden, so dass Tanklastzüge die Notstromaggregate in der Reihenfolge der Restlaufzeiten (zunächst auslaufende Aggregate zuerst, andere später) unter Berücksichtigung der Wegstrecken versorgen können. Hierzu ist es nötig, dass die Position der jeweiligen Notstromaggregate bekannt ist. Dies erfolgt im einfachsten Fall durch Hinterlegung der jeweiligen Position des Aggregates in der Telekommunikationszentrale beim Aufbau des jeweiligen Aggregates. Im Fall von mobilen Notstromaggregaten muss bei jedem Standorfinrechsel die Position aktualisiert werden.

Die Telekommunikationszentrale kann auch mobil ausgestaltet sein, beispielweise in oder als Teil eines Kraftfahrzeugs. So könnte beispielsweise auch ein Tanklastzug eine Telekommunikationszentrale enthalten, so dass die Kraftstoffverteilung auf dem Wege geplant werden kann. Selbstverständlich kann das erfindungsgemäße System auch mehrere Telekommunikationszentralen enthalten. Beispielsweise können verschiedene Zentralen für verschiedene Aufgaben (beispielsweise Nachschub und Wartung/Reparatur) oder verschiedene Regionen vorhanden sein. Auch ist eine Kombination von stationären und mobilen Telekommunikationszentralen möglich.

In einer weiteren Ausführungsform der Erfindung enthält das Notstromaggregat eine GPS-Einheit (Global Positioning System), die den jeweiligen Standort automatisch der Telekommunikationszentrale übermittelt. Auf diese Weise ist jeweils der genaue Standort bei der Zentrale hinterlegt. Derartige GPS-Einheiten sind bekannt und käuflich zu erwerben. In einer weiteren Ausführungsform der Erfindung erfolgt die Priorisierung des Kraftstoffnachschubs auch (oder ausschließlich) unter Berücksichtigung der zu versorgenden Einrichtung, so dass beispielsweise Krankenhäuser schneller versorgt werden, als Verwaltungseinrichtungen.

Ein wesentlicher Gesichtspunkt der Erfindung ist die Notstromversorgung von Tankstellen oder Tanklagern, da im Fall eines lang andauernden Stromausfalls mittelbar auch die Kraftstoffversorgung der Infrastruktur, insbesondere der Notstromaggregate, gefährdet ist. In einer Ausführungsform der Erfindung ist mindestens eine Tankstelle oder ein Tanklager mittels eines Notstromaggregats versorgt, so dass im Fall des Ausfalls des Stromnetzes die weitere Versorgung mit Kraftstoff gewährleistet ist. In einer besonderen Ausführungsform der Erfindung handelt es sich dabei um ein mobiles Notstromaggregat, welches über entsprechende Schnittstellen mit der Tankstelle im Fall des Stromausfalls verbunden werden kann.

Ein weiterer Aspekt der Erfindung ist die Nutzung des Telekommunikationssystems der erfindungsgemäßen Notstromaggregate zur Übermittlung weiterer Daten. Hierzu können die Notstromaggregate über entsprechende Schnittstellen beispielsweise an Computer der zu versorgenden Krankenhäuser, der Polizei, des THW, der Feuerwehr oder anderer Organisationen angeschlossen werden und die Daten der verschiedenen Einheiten übertragen. Der Begriff der Datenübertragung umfasst dabei die Übertragung von Dateien (beispielsweise Binärdateien), aber auch die Übertragung von Sprache und/oder Bildern. Bei einem großflächigen Stromausfall und daraus resultierender großflächiger Notstromversorgung mittels des erfindungsgemäßen Systems resultiert durch die Errichtung eines autarken Telekommunikationsnetzes eine leistungsfähige Infrastruktur zur Übermittlung der wichtigsten Daten und somit der Aufrechterhaltung der öffentlichen Ordnung.
Ein spezieller Aspekt hierbei ist die Verschlüsselung der übertragenen Daten nach bekannten Methoden. Das Prinzip der Datenübertragung über Telekommunikationsnetze mit oder ohne Datenverschlüsselung ist prinzipiell bekannt, an anderer Stelle beschrieben und bedarf daher an dieser Stelle keiner weiteren Erläuterung.

Besonders kritisch sind Stromausfälle für Krankenhäuser, da diese Strom zum Betrieb medizinischer und lebenserhaltender Geräte benötigen. Aber auch andere sicherheitsrelevante Systeme (wie Radargeräte der Flugsicherung, Ampeln oder Signalanlagen der Eisenbahn) oder andere Versorger (wie Wasserwerke, Gaswerke oder Telekommunikationsunternehmen) benötigen Strom zum Arbeiten. Aus diesem Grund verfügen beispielsweise Krankenhäuser und andere kritische Einrichtungen ebenso wie viele Unternehmen über eine Notstromversorgung, die häufig mit Dieselgeneratoren betrieben wird und sich automatisch einschaltet, sobald ein Stromausfall eintritt.

Neben der Notstromversorgung stellt die Kraftstoffversorgung für Fahrzeuge von Einsatzkräften (Feuerwehr, Polizei, THW, Behörden) und anderen wichtigen Dienstleistern (wie Notärzte, Lebensmittelversorgung, öffentlicher Nahverkehr etc.) einen weiteren wichtigen Aspekt zur Aufrechterhaltung der öffentlichen Ordnung und der Versorgung der Bevölkerung dar. Ähnlich wie bei der Notstromversorgung sind auch hier Einsatzkräfte in der Regel nicht in der Lage, die Kraftstoffversorgung ihrer Fahrzeuge selbst sicherzustellen. So hat beispielsweise die Berliner Feuerwehr keine eigenen Tankstellen, und auch das THW ist für den Betrieb von Fahrzeugen, Stromerzeugung und Pumpen auf Kraftstoffversorgung durch "normale" Tankstellen angewiesen. Die Tankstellen und Tanklager stellen somit eine wichtige Bedingung für die Aufrechterhaltung vieler anderer kritischer Infrastrukturen dar. Tankstellen sind bei Stromausfall jedoch ebenfalls selbst betroffen und nicht mehr in der Lage, Kraftstoff aus ihren Tanks zur Verfügung zu stellen.

Das oben beschriebene erfindungsgemäße System löst die genannten Probleme.

Die Ausführungsform der Erfindung mit Errichtung eines autarken Telekommunikationsnetzes ermöglicht darüber hinaus Errichtung und Betrieb einer Strom- und Telekommunikationsversorgung in infrastrukturschwachen Gebieten, beispielsweise im Fall eines größeren Versorgungsausfalls, in Krisen- oder Kriegsgebieten oder auch in Gegenden, in denen es keine funktionierenden Netze gibt. So kann beispielsweise in einer infrastrukturschwachen Gegend eine Anzahl von erfindungsgemäßen Notstromaggregaten aufgestellt werden, die nach Inbetriebnahme ein eigenes Telekommunikationsnetz aufbauen. Dieses kann neben den Betriebsdaten des Notstromversorgungsaggregats auch weitere Daten übermitteln (s. unten). In speziellen Ausführungsformen ist auch der Abwurf erfindungsgemäßer Notstromaggregate (z.B. per Fallschirm) aus Flugzeugen möglich. Bei dieser Ausführungsform kann das Notstromaggregat beispielsweise selbständig nach der Landung gestartet werden. In einer weiteren Ausführungsform der Erfindung wird nach dem Abwurf oder dem Aufstellen der Notstromaggregate nur die Telekommunikationseinheit aktiviert, die sich mit anderen Einheiten zu einem autarken Telekommunikationsnetz verbindet. Über dieses autarke Telekommunikationsnetz kann das Notstromaggregat bei Bedarf gestartet werden. In einer weiteren Spezialisierung dieses Aspektes der Erfindung kann das Notstromaggregat auch durch Solarpanel, Brennstoffzellen, Piezoelemente oder andere alternative Energiequellen ergänzt oder ersetzt sein. In dieser Ausführungsform kann in größeren Gebieten auf einfache Weise eine Telekommunikationsinfrastruktur zur Verfügung gestellt werden.

### Beispiele:

Beispiel 1: Ein Krankenhaus ist mit einem erfindungsgemäßen Notstromaggregat ausgestattet. Bei Ausfall des Stromnetzes wird automatisch der Notstromgenerator aktiviert. Gleichzeitig wird die Telekommunikationseinheit aktiviert. Diese verbindet sich automatisch mit einer Telekommunikationszentrale und übermittelt wenigstens die Restkraftstoffmenge. In der Telekommunikationszentrale wird das Signal des Notstromaggregates registriert und aus der Restkraftstoffmenge die voraussichtliche Laufzeit ermittelt. In der Telekommunikationszentrale wird dann der Nachschub für das Notstromaggregat organisiert.

Beispiel 2a: In einer Region sind eine Reihe von Dienstleistern (Feuerwehrdienststellen, Krankenhäuser, Polizeidienststellen) mit erfindungsgemäßen Notstromaggregaten ausgestattet. Nach großflächigem Stromausfall startet in jeder der Einrichtungen das jeweilige Notstromaggregat.

Gleichzeitig werden die Telekommunikationseinheiten gestartet. Die jeweiligen Telekommunikationseinheiten verbinden sich automatisch zu einem autarken Telekommunikationsnetz, welches unabhängig von bestehenden Telekommunikationsnetzen operiert. Die jeweiligen Notstromaggregate übertragen mindestens die jeweilige Kraftstoffmenge an eine Telekommunikationszentrale, die aus den erhaltenen Daten den Versorgungsplan erstellt.

Beispiel 2b: In einer Abwandlung von Beispiel 2a weisen die erfindungsgemäßen Notstromaggregate noch Schnittstellen zur Datenübertragung auf. Nach Start der Notstromaggregate können über die Telekommunikationseinrichtungen und das darüber aufgebaute autarke Telekommunikationsnetz zusätzliche Daten übertragen werden (beispielsweise Einsatzdaten von Polizei und Feuerwehr).

Beispiel 3: Nach einem großflächigen Stromausfall werden mehrere erfindungsgemäße Notstromaggregate in der vom Stromausfall betroffenen Region aufgestellt. Nach Aufstellung werden die Aggregate manuell gestartet. Gleichzeitig werden die Telekommunikationseinrichtungen gestartet, welche ein autarkes Telekommunikationsnetz aufbauen. Die Notstromaggregate sind mit einem GPS-System versehen. Die Notstromaggregate übertragen neben der Kraftstoffrestmenge auch die GPS-Daten, so dass in der Telekommunikationszentrale stets ein Überblick über Ort und Restlaufzeit der Notstromaggregate vorhanden ist. Aus der Telekommunikationszentrale kann dann der Energienachschub für die Notstromaggregate organisiert werden.

Beispiel 4a: In einem Gebiet, welches weder Strom-, noch Telekommunikations-Infrastruktur aufweist (z. B. Dschungelgebiet oder Ballungsgebiet z.B. nach EMP oder sonnensturmbedingtem großflächigen Netzausfall), werden mobile Notstromaggregate aufgestellt oder von Flugzeugen aus mit Fallschirm abgeworfen. Nach dem Aufstellen bzw. der Landung starten die Notstromaggregate automatisch. Gleichzeitig werden die Telekommunikationseinrichtungen gestartet. Die Notstromaggregate sind in der Lage, an den jeweiligen Punkten die Stromversorgung für einige Zeit sicherzustellen. Gleichzeitig wird ein autarkes Telekommunikationsnetz aufgebaut, das die Telekommunikationsversorgung in der Region sicherstellt. Durch die Vielzahl aufgestellter Notstromaggregate kann die Telekommunikation auch über längere Distanz sichergestellt werden. Durch gleichzeitig übermittelte GPS-Daten hat die Telekommunikationszentrale jeweils ein vollständiges Bild der einzelnen Aggregate bezüglich des Standortes und der jeweiligen Restlaufzeit.

Beispiel 4b: In einer alternativen Ausführungsform sind die Notstromaggregate so ausgestaltet, dass sie Solarzellen und einen Akku als Puffer für Nachtzeiten aufweisen. Auf diese Weise kann die Telekommunikationsübertragung langfristig sichergestellt werden. In dieser Ausführungsform ist die Versorgung mit Notstrom nur sekundär, primär ist die Telekommunikationsversorgung des Gebietes.

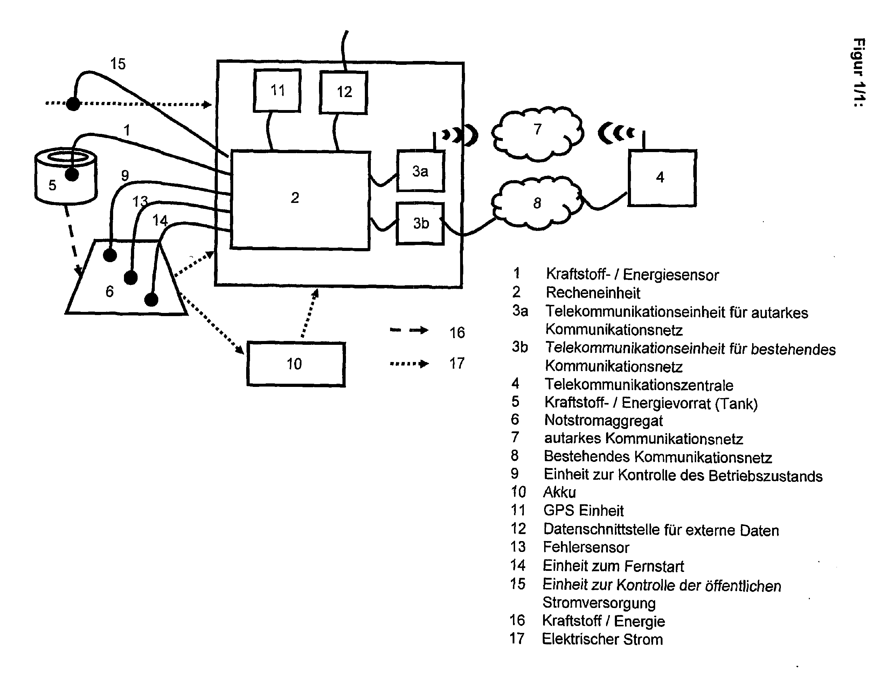

## Patentansprüche

1. System zur Notstromversorgung, enthaltend mindestens zwei Notstromaggregate und mindestens eine Telekommunikationszentrale, **dadurch gekennzeichnet, dass** die Notstromaggregate folgende Merkmale aufweisen
a) mindestens ein Kraftstoffsensor, der die Menge des Kraftstoffvorrates und/oder den Kraftstoffverbrauch pro Zeiteinheit ermittelt,
b) mindestens eine Recheneinheit, die aus der Veränderung des Kraftstoffvorrates oder aus dem Kraftstoffverbrauch die Restlaufzeit ermittelt,
c) mindestens eine Telekommunikationseinheit, die sich nach dem Start des Notstromaggregates automatisch mit anderen Notstromaggregaten verbindet und mindestens die Restlaufzeit der Notstromaggregates übermittelt,
weiterhin **dadurch gekennzeichnet, dass** die Telekommunikationseinheiten von mindestens zwei Notstromaggregaten selbständig ein autarkes Telekommunikationsnetz aufbauen
und dass die Telekommunikationszentrale, mindestens die Restlaufzeiten der Notstromaggregate empfängt, priorisiert und die Logistik des Kraftstoffnachschubs organisiert,
so dass Tanklastzüge die Notstromaggregate in der Reihenfolge der Restlaufzeiten unter Berücksichtigung der Wegstrecken versorgen.

2. System zur Notstromversorgung, gemäß Anspruch 1, **dadurch gekennzeichnet, dass** mindestens ein Notstromaggregat zusätzlich eine GPS-Einheit zur Standortbestimmung aufweist.

3. System zur Notstromversorgung, gemäß Anspruch 1, **dadurch gekennzeichnet, dass** mindestens ein Notstromaggregat zusätzlich eine Einheit zur Kontrolle der Wartungsintervalle und/oder zur Kontrolle des Betriebszustandes aufweist.

4. System zur Notstromversorgung, gemäß Anspruch 1, **dadurch gekennzeichnet, dass** die Notstromaggregate mobil oder stationär ausgestaltet sind.

5. System zur Notstromversorgung, gemäß Anspruch 1, **dadurch gekennzeichnet, dass** mindestens ein Notstromaggregat eine Fernstartung ermöglicht.

6. System zur Notstromversorgung, gemäß Anspruch 1, **dadurch gekennzeichnet, dass** mindestens ein Notstromaggregat ein oder mehrere Fehlersensoren aufweist.

7. System zur Notstromversorgung, gemäß Anspruch 1, **dadurch gekennzeichnet, dass** mindestens ein Notstromaggregat ein Tanklager oder eine Tankstelle mit Strom versorgt.

8. System zur Notstromversorgung, gemäß Anspruch 1, **dadurch gekennzeichnet, dass** mindestens ein Notstromaggregat zusätzlich mindestens eine Schnittstelle zur Übertragung weiterer Daten aufweisen.

9. System zur Notstromversorgung, gemäß Anspruch 1, **dadurch gekennzeichnet, dass** die Telekommunikationszentrale stationär oder mobil ausgestaltet ist.

## Claims

1. A system for emergency power supply, comprising at least two emergency power systems and at least one telecommunication center, **characterized in that** the emergency power systems have the following features:
a) at least one fuel sensor, which detects the quantity of the fuel reserve and/or the fuel consumption per unit of time,
b) at least one computing unit, which determines the remaining life from the change of the fuel reserve or from the fuel consumption,
c) at least one telecommunication unit, which after the start of the emergency power system is automatically connected with other emergency power systems and transmits at least the remaining life of the emergency power system,
further **characterized in that** the telecommunication units of at least two emergency power systems automatically form an autonomous telecommunication network and
that the telecommunication center receives at least the remaining times of the emergency power systems, prioritizes them and organizes the logistics of the fuel replenishment,
so that tanker trucks supply the emergency power systems in the order of the remaining lives, considering the respective distances.

2. The system for emergency power supply according to claim 1, **characterized in that** at least one emergency power system additionally comprises a GPS unit for detecting the location.

3. The system for emergency power supply according to claim 1, **characterized in that** at least one emergency power system additionally comprises a unit for controlling the maintenance intervals and/or for controlling the operating state.

4. The system for emergency power supply according to claim 1, **characterized in that** the emergency power systems are mobile or stationary.

5. The system for emergency power supply according to claim 1, **characterized in that** at least one emergency power system allows a remote start.

6. The system for emergency power supply according to claim 1, **characterized in that** at least one emergency power system comprises one or more fault sensors.

7. The system for emergency power supply according to claim 1, **characterized in that** at least one emergency power system supplies a fuel depot and/or a fuel station with power.

8. The system for emergency power supply according to claim 1, **characterized in that** at least one emergency power system additionally comprises at least one interface for the transmission of further data.

9. The system for emergency power supply according to claim 1, **characterized in that** the telecommunication center is stationary or mobile.

## Revendications

1. Système pour l'alimentation en courant de secours, comprenant au moins deux générateurs de courant de secours et au moins un centre de télécommunication, **caractérisé en ce que** les générateurs de courant de secours ont les caractéristiques suivantes:
a) au moins un capteur de carburant, qui détecte la quantité de la réserve du carburant et/ou la consommation de carburant par unité de temps,
b) au moins une unité de calcul, qui détermine la durée de vie à partir du change de la réserve de carburant ou à partir de la consommation de carburant,
c) au moins une unité de télécommunication, qui après le démarrage du générateur de courant de secours est automatiquement raccordée avec d'autres générateurs de courant de secours et transmet au moins la durée de vie du générateur de courant de secours,
en outre **caractérisé en ce que** les unités de télécommunication d'au moins deux générateurs de courant de secours automatiquement forment un réseau de télécommunication autonome et
que le centre de télécommunication reçoit au moins les durées de vie des générateurs de courant de secours, les priorise et organise la logistique de réalimentation du carburant,
de sorte que des camions-citernes alimentent les générateurs de courant de secours dans l'ordre des durées de vie, en considérant les distances respectives.

2. Système pour l'alimentation en courant de secours selon la revendication 1, **caractérisé en ce qu'**au moins un générateur de courant de secours additionnellement comprend un système GPS pour détecter le site.

3. Système pour l'alimentation en courant de secours selon la revendication 1, **caractérisé en ce qu'**au moins un générateur de courant de secours additionnellement comprend une unité pour commander les intervalles de maintenance et/ou pour contrôler l'état de fonctionnement.

4. Système pour l'alimentation en courant de secours selon la revendication 1, **caractérisé en ce que** les générateurs de courant de secours sont mobiles ou stationnaires.

5. Système pour l'alimentation en courant de secours selon la revendication 1, **caractérisé en ce qu'**au moins un générateur de courant de secours permet un démarrage à distance.

6. Système pour l'alimentation en courant de secours selon la revendication 1, **caractérisé en ce qu'**au moins un générateur de courant de secours comprend un ou plusieurs détecteurs de défaut.

7. Système pour l'alimentation en courant de secours selon la revendication 1, **caractérisé en ce qu'**au moins un générateur de courant de secours alimente un réservoir de carburant et/ou une station-service avec du courant.

8. Système pour l'alimentation en courant de secours selon la revendication 1, **caractérisé en ce qu'**au moins un générateur de courant de secours additionnellement comprend au moins un interface pour la transmission de données additionnelles.

9. Système pour l'alimentation en courant de secours selon la revendication 1, **caractérisé en ce que** le centre de télécommunication est stationnaire ou mobile.
